# EUROPÄISCHE PATENTSCHRIFT

(11) **EP 3 524 414 B1**
(45) Veröffentlichungstag und Bekanntmachung des Hinweises auf die Patenterteilung: **27.07.2022**
(21) Anmeldenummer: 19160811.6
(22) Anmeldetag: 29.09.2011
(51) Int. Cl.: B29C 70/44, B29C 70/34, B29C 33/40, B29C 51/10, B66C 1/02

(54) **UNTERDRUCKBEAUFSCHLAGBARER STEMPEL AUS SCHAUMKUNSTSTOFF**
VACUUM ACTUATABLE FOAM PLASTIC STAMP
TAMPON EN MOUSSE PLASTIQUE ACTIONNABLE SOUS VIDE

(30) Priorität: 02.10.2010 DE 102010047346
(43) Veröffentlichungstag der Anmeldung: 14.08.2019
(62) Teilanmeldung aus: 11007930.8
(73) Patentinhaber: Premium AEROTEC GmbH, 86179 Augsburg (DE)
(72) Erfinder: Kulik, Christian, 27711 Osterholz-Scharmbeck (DE); Tümena, Christian, 28816 Stuhr (DE)
(74) Vertreter: LKGLOBAL Lorenz & Kopf PartG mbB Patentanwälte

(56) Entgegenhaltungen:
- DE-A1- 2 629 160
- US-A- 4 389 064

## Beschreibung

Die vorliegende Erfindung betrifft den Bereich der Faserverbundtechnologie und hierbei insbesondere die Erstellung eines Vakuumaufbaus.

Ein Verfahren zur Erstellung eines Vakuumaufbaus sowie ein damit erstellter Vakuumaufbau sind beispielsweise aus der DE 101 56 123 B4 bekannt. Der bekannte Vakuumaufbau dient zur Verarbeitung eines aus mehreren Komponenten zusammengesetzten Faserverbundhalbzeuges zu einem ausgehärteten Faserverbundbauteil. Nachdem das Faserverbundhalbzeug an einer Formfläche eines Werkzeuges positioniert wurde, wird die der Formfläche des Werkzeuges abgewandte Oberfläche des Faserverbundhalbzeuges durch eine Anordnung mehrerer Membranen und einer luftdichten Folie überdeckt. Nach Abdichtung der Folie gegenüber der Formfläche des Werkzeuges kann somit ein von der Folie überdeckter und das Faserverbundhalbzeug enthaltender Raum entlüftet (evakuiert) werden, um damit eine Einschlussaushärtung des Faserverbundhalbzeuges durchzuführen, bei welcher die einzelnen Komponenten des Faserverbundhalbzeuges ausgehärtet und gleichzeitig fest miteinander verbunden werden (so genanntes "Co-Curing").

Derartige Vakuumaufbauten sind aus dem Bereich der Faserverbundtechnologie in vielfältigen weiteren Ausführungen bekannt.

Ganz allgemein kann damit z. B. eine Infiltration des Faserverbundhalbzeuges oder einzelner Komponenten davon mit einem flüssigen oder zähflüssigen Matrixmaterial (z. B. Epoxidharzsystem) realisiert bzw. vereinfacht werden, falls das Faserverbundhalbzeug bzw. einzelne Komponenten einer Faserverbundhalbzeug-Zusammensetzung "trocken", (d. h. noch nicht mit Matrixmaterial infiltriert) eingesetzt werden.

Unabhängig davon stellt der Vakuumaufbau eine einfache Möglichkeit dar, das Faserverbundhalbzeug vor und/oder während der (zumeist thermisch bewirkten) Aushärtung unter Druck zu setzen, etwa um das Faserverbundhalbzeug zu "kompaktieren" bzw. im Falle eines mehrteiligen Faserverbundhalbzeuges dessen einzelne Komponenten hierbei auch fest aneinander zu pressen (und ein so genanntes "Co-Bonding" zu realisieren). Um die Wirkung des Vakuums (Unterdruck) zur Druckerzeugung noch zu steigern, wird die Außenseite der luftdichten Folie oder der gesamte Vakuumaufbau oftmals noch mit einem äußeren Überdruck beaufschlagt, etwa indem der Vakuumaufbau (z. B. vor dem Beginn der Aushärtung) in eine Druckkammer (Autoklav) verbracht wird. Der Innendruck einer solchen Druckkammer kann während der Aushärtung z. B. auf Werte im Bereich von etwa 5 bis 10 bar eingestellt werden.

Bei den bekannten Verfahren zur Erstellung eines Vakuumaufbaus wird die Folie manuell aufgelegt, was einen gewissen Aufwand darstellt, insbesondere wenn der Vakuumaufbau zur Herstellung eines besonders großen Faserverbundbauteils dient.

Da die Folie unmittelbar oder mittelbar (z. B. über eine Anordnung von Membranen etc.) an einer nicht-ebenen Oberfläche des Faserverbundhalbzeuges aufgelegt werden muss, ergibt sich nachteiligerweise außerdem eine geringe Reproduzierbarkeit dieses Verfahrensschrittes, was insbesondere bei einer Serienfertigung von Faserverbundbauteilen ein Problem darstellen kann.

Oftmals wird die Folie auch nicht faltenfrei aufgebracht, was zu einer ungleichmäßigen Druckbeaufschlagung im späteren Aushärtungsprozess führt. Letztere Problematik ist besonders gravierend, wenn die nicht-ebene Oberfläche des Faserverbundhalbzeuges eine nicht-abwickelbare Form besitzt. In diesem Fall sind Falten der gemäß bekannter Verfahren aufgelegten Folie unvermeidlich.

Es ist eine Aufgabe der vorliegenden Erfindung, die Erstellung eines Vakuumaufbaus der eingangs genannten Art hinsichtlich der Reproduzierbarkeit der Aufbringung der Folie zu verbessern und eine möglichst faltenfreie Aufbringung, insbesondere auch bei einer nicht-abwickelbaren Formgestaltung der Oberfläche des Faserverbundhalbzeuges, zu ermöglichen.

Diese Aufgabe wird bei der Erfindung dadurch gelöst, dass das Aufbringen der Folie mittels eines aus einem flexiblen Material gebildeten Stempels mit einer Stempelfläche durchgeführt werden kann, an welcher die Folie gehalten ist.

Der Begriff "Stempel" soll ein die Folie (an einer "Stempelfläche") haltendes Hilfsmittel bezeichnen, welches zum Aufbringen der Folie an die Oberfläche des Faserverbundhalbzeuges herangeführt und sodann (ohne die Folie) wieder von dieser Oberfläche weggeführt wird.

Die Übergabe der Folie vom Stempel an den Vakuumaufbau kann z. B. automatisiert erfolgen, indem der Stempel hierbei von einem Roboter oder dergleichen gehalten und bewegt wird.

Der Stempel ist aus einem als Schaumkunststoff ausgebildeten Kunststoffmaterial als das flexible Material, z. B. PU-Schaum gebildet. Gemäß einem anderen, vorliegend offenbarten Aspekt könnte der Stempel z. B. aus einem flexiblen Faserverbundmaterial gebildet sein (z. B. relativ dünne Fasermatte in einer demgegenüber wesentlich dickeren Schicht eines dauerelastischen Matrixmaterials). Sowohl der Stempel als solcher, oder alternativ zumindest ein dessen Stempelfläche darstellender Abschnitt kann aus einem derartigen mechanisch flexiblen Werkstoff bestehen. Abgesehen von der hieraus resultierenden schonenden Behandlung der Folie sowie des Faserverbundhalbzeuges (und/oder einer etwaig darüber befindlichen Membrananordnung) besitzt die Flexibilität des Stempels noch einen gravierenden weiteren Vorteil im Falle einer insgesamt konkaven oder konvexen, einachsig oder zweiachsig gekrümmten, nicht-ebenen Oberfläche des Faserverbundhalbzeuges. In diesem Fall gestattet die Flexibilität des Stempel nämlich, dass die Stempelfläche lokal an jeder Stelle der konkaven oder konvexen Oberfläche des Faserverbundhalbzeuges im Wesentlichen orthogonal an diese Oberfläche herangeführt und von dieser Oberfläche wieder weggeführt werden kann. Hierfür kann je nach Geometrie der Oberfläche ein nicht-gleichzeitiges Heranführen (und dementsprechend Zurückziehen) der einzelnen Bereiche der Stempelfläche zum Faserverbundhalbzeug hin (bzw. vom Faserverbundhalbzeug weg) erforderlich sein. Etwas vereinfacht ausgedrückt gestattet die Flexibilität des Stempelmaterials vorteilhaft ein "Abrollen" des Stempels oder zumindest von Teilen davon an der betreffenden Oberfläche.

Eine dementsprechend interessante Anwendungsform der Erfindung sieht vor, dass ein Faserverbundhalbzeug verarbeitet wird, dessen nicht-ebene Oberfläche insgesamt gekrümmt ist, insbesondere jedoch lokale Vertiefungen und/oder Erhabenheiten aufweist. Insbesondere in diesem Fall erweist sich die Flexibilität des Stempels in der Praxis als großer Vorteil.

In einer bevorzugten Ausgestaltung kann der Stempel aufgrund der Verwendung des flexiblen Materials z. B. einer nennenswerten Durchmesserveränderung unterzogen werden, ohne hierdurch irreversibel geschädigt zu werden. Beispielsweise kann eine "Grobgestalt" der Stempelfläche im entspannten Zustand des Stempels eine einachsige "zylindrische" Krümmung besitzen, wobei diese Krümmung (beim erfindungsgemäßen Gebrauch des Stempels) nennenswert verändert werden kann, ohne dass der Stempel hierdurch irreversibel geschädigt wird. Eine nennenswerte Krümmungsveränderung soll insbesondere z. B. dann gegeben sein, wenn ein bestimmter Durchmesser (im entspannten Stempelzustand) hierbei um wenigstens einen Faktor 1,1 veränderbar ist, oder sogar um wenigstens einen Faktor 2 (also beim Gebrauch zumindest verdoppelt und/oder zumindest halbiert werden kann).

Insbesondere kann die nicht-ebene Oberfläche des Faserverbundhalbzeuges eine nicht-abwickelbare Form besitzen. Insbesondere in diesem Fall kann der Stempel so ausgebildet sein, dass dieser aufgrund der Verwendung des flexiblen Stempelmaterials auch zweiachsig in einem Ausmaß krümmbar ist, so dass die "Grobgestalt" der Stempelfläche beim Gebrauch des Stempels so verformbar ist, dass ein problemloses Aufbringen und Entformen des Stempels an der nicht-abwickelbaren Form des Faserverbundhalbzeuges ermöglicht ist. Die Erfindung eignet sich somit auch bei komplizierter dreidimensional geformten Oberflächen des Faserverbundhalbzeuges. Diese Oberfläche kann z. B. im Wesentlichen sphärisch gekrümmt sein, wofür sich eine entsprechend sphärisch gekrümmte "Grobgestalt" der Stempelfläche anbietet.

Das Faserverbundhalbzeug kann einteilig oder mehrteilig, d. h. aus mehreren Komponenten zusammengesetzt sein. Die Erfindung ist insbesondere zur Anwendung bei mehrteiligen Faserverbundhalbzeugen interessant, weil diese Mehrteiligkeit oftmals zu einer komplizierteren Form der mittels der Folie zu überdeckenden Oberfläche führt, was diese Oberflächen für das erwähnte bekannte manuelle Auflegen der Folie äußerst problematisch macht.

Im Falle eines mehrteiligen Faserverbundhalbzeuges wird der erfindungsgemäß erstellte Vakuumaufbau bevorzugt zur Schaffung einer innigen und festen Verbindung der einzelnen Komponenten bei einer nachfolgenden Aushärtung (z. B. thermische Aushärtung) verwendet. Prinzipiell kann jede Komponente des Faserverbundhalbzeuges bei der Erstellung des Vakuumaufbaus entweder trocken oder bereits mit Matrixmaterial durchsetzt (als so genanntes "Prepreg") eingesetzt werden. Falls eine oder mehrere trockene Komponenten vorhanden sind, so kann vor Beginn des Aushärtungsprozesses zunächst eine Infiltration mit Matrixmaterial gemäß an sich bekannter Methoden erfolgen. Derartige Methoden sind aus dem Stand der Technik hinreichend bekannt und bedürfen daher hier keiner näheren Erläuterung. Lediglich beispielhaft sei auf die eingangs bereits erwähnte DE 101 56 123 B4 verwiesen, in welcher eine derartige Infiltration einer Komponente des im Vakuumaufbau eingeschlossenen Faserverbundhalbzeuges beschrieben ist.

DE 26 29 160 A1 befasst sich mit einer Saugplatte, die aus einem luftundurchlässigen Block mit weichelastischen Eigenschaften besteht, der einen oder mehrere zu der Haltefläche hin offene Hohlräume aufweist, während auf seiner Rückseite ein Stahlblech oder ein anderes versteifend wirkendes Flächenelement angebracht ist, das gegebenenfalls auch eine Krümmung aufweisen kann. Die Saugplatte weist eine Vielzahl von Saugnäpfen in einer regelmäßigen oder einer unregelmäßigen Anordnung auf, die durch ein Kanalsystem untereinander und mit einem zentralen Vakuum- und Druckluftanschluss verbunden sind.

Gemäß einer Ausführungsform der Erfindung wird ein Faserverbundhalbzeug verarbeitet, welches aus wenigstens einer schalenförmigen Komponente und wenigstens einer Verstärkungsprofilkomponente zusammengesetzt ist.

Die schalenförmige Komponente kann insbesondere zur Ausbildung einer Rumpfschale eines Fahrzeuges, insbesondere Luftfahrzeuges, vorgesehen sein und z.B. eine einachsige oder zweiachsige Krümmung aufweisen. Insbesondere für diesen Anwendungsfall können die Verstärkungsprofilkomponenten zur Ausbildung von längsverlaufenden Verstärkungsprofilen ("Stringern") oder querverlaufenden Verstärkungsprofilen (Spanten) vorgesehen sein. Die Erfindung eignet sich insbesondere zur Herstellung von CFK-Strukturbauteilen im Flugzeugbau.

In einer besonders bevorzugten Ausführungsform der Erfindung ist die Stempelfläche des zur Folienübergabe verwendeten Stempels in Anpassung an die nicht-ebene Oberfläche des Faserverbundhalbzeuges formgestaltet.

Der Begriff "in Anpassung an die Oberfläche des Faserverbundhalbzeuges" soll selbstverständlich insbesondere den Fall umfassen, dass die Stempelfläche ein mehr oder weniger exaktes "Negativ" der Oberfläche des Faserverbundhalbzeuges darstellt. Ganz allgemein soll die Anpassung der Stempelfläche jedoch bereits dann gegeben sein, wenn die Stempelfläche abweichend von einer völlig ebenen Form eine nennenswert der nicht-ebenen Oberfläche des Faserverbundhalbzeuges ähnelnde Form besitzt. Darüber hinaus soll eine solche Anpassung auch dann gegeben sein, wenn die Stempelfläche insgesamt (also von ihrer "Grobgestalt" her) konkav oder konvex ist und damit einer insgesamt konvexen bzw. konkaven "Grobgestalt" der Oberfläche des Faserverbundhalbzeuges folgt (unabhängig davon, ob die Stempelfläche lokal betrachtet etwaig vorhandenen lokalen Vertiefungen und/oder Erhabenheiten der Faserverbundhalbzeug-Oberfläche folgt oder nicht).

Der Begriff "Oberfläche des Faserverbundhalbzeuges" bezeichnet in einem weiteren Sinne diejenige Oberfläche, auf welche bei der Erstellung des Vakuumaufbaus die Folie zur Anlage kommt. Diesbezüglich ist zu bedenken, dass je nach konkretem Aufbau die Folie unmittelbar oder mittelbar (z. B. über die bereits erwähnte Anordnung von Membranen, Infiltrationsvlieslagen etc.) auf das Faserverbundhalbzeug aufgebracht wird.

In einer besonders bevorzugten Ausführungsform der Anpassung der Stempelfläche an die nicht-ebene Oberfläche des Faserverbundhalbzeuges folgt die Stempelfläche sowohl im Wesentlichen der "Grobgestalt" (z. B. Konkavität oder Konvexität) der betreffenden Oberfläche als auch im Wesentlichen den etwaig in Abweichung von der "idealen" Konkavität bzw. Konvexität vorhandenen lokalen Vertiefungen und Erhabenheiten dieser Oberfläche.

Es versteht sich, dass mit einer derart angepassten Stempelfläche die Qualität und Reproduzierbarkeit der Folienaufbringung weiter verbessert werden kann. Zur Erzielung dieses Vorteils ist vor allem die Anpassung der Stempelfläche auf "lokaler Skala" besonders bedeutsam. Damit können lokale Vertiefungen und/oder Erhabenheiten (allgemein: eine Korrugation) der Oberfläche des Faserverbundhalbzeuges beim Aufbringen der Folie durch das Heranführen der Stempelfläche an diese Oberfläche gut gehandhabt werden (und z. B. ein Faltenwurf der Folie reduziert werden). Demgegenüber ist die Anpassung der Stempelfläche hinsichtlich der Grobgestalt dieser Oberfläche, also z. B. einer insgesamt gekrümmten Gestaltung zumeist weniger entscheidend, weil aufgrund der Flexibilität des Stempelmaterials dieser Stempel gewissermaßen während des Heranführens an das Faserverbundhalbzeug in diese Grobgestalt gebracht werden kann, etwa indem der Stempel nicht gleichzeitig an allen Stellen herangeführt, sondern die verschiedenen Bereiche der Stempelfläche nacheinander an das Faserverbundhalbzeug herangeführt werden. Hierfür ist z. B. die weiter oben bereits erwähnte Ausgestaltung des Stempels sehr vorteilhaft, bei welcher die Stempelfläche im entspannten Stempelzustand eine bestimmte Krümmung besitzt, die jedoch aufgrund der Flexibilität des Stempels nennenswert veränderbar ist. Bei der Verwendung eines derartigen Stempels kann insbesondere vorgesehen sein, dass der Stempel vor und nach der Folienübergabe in seinem Durchmesser verringert (bei konkaver Oberfläche des betreffenden Faserverbundhalbzeuges) bzw. vergrößert (bei konvexer Oberfläche des Faserverbundhalbzeuges) werden kann, um insbesondere auch bei korrugierter Oberfläche des Faserverbundhalbzeuges das Heranführen und auch das nachfolgende Entformen des Stempels zu vereinfachen bzw. durch diese Krümmungsveränderung erst zu ermöglichen (Vermeidung von Kollisionen zwischen Stempel und Faserverbundhalbzeug, welche zu einer Beschädigung des Stempels und/oder des Faserverbundhalbzeuges führen könnten).

In einer Ausführungsform ist z. B. vorgesehen, dass zum Aufbringen der Folie mittels des Stempels dieser zunächst mit einem mittleren Bereich der Stempelfläche herangeführt wird, und äußere Stempelflächenbereiche sodann sukzessive durch ein "Abrollen" dieser Bereiche an die Oberfläche des Faserverbundhalbzeuges herangeführt werden. Nach somit erfolgter Ablage der Folie kann der Stempel in kinematischer Umkehr derart wieder zurückgezogen werden, dass zunächst ein oder mehrere äußere Stempelbereiche von der Oberfläche entfernt werden, und erst dann sukzessive weiter mittig liegende Stempelbereiche.

In einer Weiterbildung dieses "Abrollverfahrens" ist vorgesehen, dass der hierbei verwendete Stempel in seinem entspannten Zustand wenigstens einen Stempelflächenabschnitt (oder z. B. auch eine Stempelfläche als solche) besitzt, dessen Krümmung "zwischen den im Gebrauch des Stempels vorkommenden Extremkrümmungen" liegt. Hierzu ein Beispiel: Falls das betreffende Faserverbundhalbzeug z. B. eine konkave Oberfläche mit einem Krümmungsdurchmesser von 3,0 m besitzt, so könnte der Krümmungsdurchmesser des entspannten Stempels z. B. 2,9 m betragen, wobei das Heranführen des Stempels in einem "eingerollten Zustand" mit einem Krümmungsdurchmesser von 2,8 m erfolgt. Der "entspannte Durchmesser" von 2,9 m liegt dann zwischen den im Gebrauch vorkommenden extremen Durchmessern von 2,8 m und 3,0 m.

Eine Anpassung der Stempelfläche an die nicht-ebene Oberfläche des Faserverbundhalbzeuges ist bereits dann vorteilhaft, wenn eine an sich ebene Folie auf die formangepasste und somit nicht-ebene Stempelfläche aufgebracht und daran befestigt bzw. gehalten wird. Sehr vorteilhaft ist bei der Erfindung vorgesehen, dass der Stempel mit Mitteln zum Verformen der daran gehaltenen Folie in Anpassung an die Formgestaltung der Stempelfläche versehen ist. In einer sehr vorteilhaften Weiterbildung wird diese Verformung vor oder während des Überdeckens der nicht-ebenen Oberfläche des Faserverbundhalbzeuges durchgeführt. Der besondere Vorteil hierbei besteht darin, dass die Folie damit aus ihrer ursprünglich ebenen (oder an der Stempelfläche allenfalls einachsig gekrümmten) Form in eine komplizierte Form, insbesondere in eine nicht-abwickelbare Form gebracht werden kann, beispielsweise in möglichst weitgehender Anpassung an die Formgestaltung der Stempelfläche.

Die Verformung der Folie kann z. B. durch eine Streckung des Folienmaterials bewerkstelligt werden, bei welcher das Folienmaterial allenfalls bis etwa zu seiner elastischen Dehnungsgrenze beansprucht wird, so dass das Folienmaterial nicht nennenswert irreversibel verformt wird.

In einer alternativen Ausführungsform wird die Verformung der Folie jedoch durch eine das Folienmaterial plastisch verformende Streckung bewerkstelligt. Hierbei kann z. B. eine irreversible Streckung der Folie wenigstens bereichsweise (z. B. im Bereich lokaler Vertiefungen und/oder Erhabenheiten der Oberfläche des Faserverbundhalbzeuges) wenigstens 10 %, insbesondere wenigstens 50 % betragen. Je nach konkretem Anwendungsfall kann diese maximale irreversible Streckung auch wesentlich größer gewählt werden, etwa größer als 100 %. Zu bedenken ist hierbei, dass zur Erstellung des hier in Rede stehenden Vakuumaufbaus eine Vielzahl von geeigneten Kunststofffolien (z. B. aus Nylon oder dergleichen) kommerziell erhältlich sind, welche einer Streckung von bis zu etwa 400 % standhalten, ohne zu reißen.

Eine Möglichkeit, die erwähnte plastisch verformende Streckung durchzuführen besteht gemäß einem vorliegend offenbarten Aspekt z. B. darin, die zunächst im unverformten Zustand an der Stempelfläche angebrachte (z. B. umlaufend am Rand der Stempelfläche befestigte) Folie dadurch entsprechend einer Korrugation der Stempelfläche auf "lokaler Skala" zu verformen, indem der Stempel mitsamt der daran gehaltenen Folie gegen einen geeignet formgestalteten Gegenstempel bzw. "Amboss" aus festem Material gedrückt wird. Ein prinzipiell auch denkbares Aufdrücken des Stempels auf das zu verarbeitende Faserverbundhalbzeug ist im Hinblick auf eine dadurch möglicherweise hervorgerufene Verformung des Faserverbundhalbzeuges problematisch.

Eine erfindungsgemäße Ausführungsvariante der Mittel zum Verformen der Folie sieht vor, dass diese Mittel wenigstens eine an der Stempelfläche mündende Vakuumpassage umfassen und das Verformen der Folie durch eine Unterdruckbeaufschlagung der Vakuumpassage(n) bewerkstelligt wird. Diese Methode ist nicht nur einfach und kostengünstig, sondern ermöglicht eine praktisch perfekte Anpassung der Folienform an die Form der Stempelfläche. Durch die Unterdruckbeaufschlagung (Vakuum) schmiegt sich die Folie an die Stempelfläche an.

Bevorzugt wird die Verformung der Folie an der Stempelfläche durchgeführt, noch bevor der Stempel an das das Faserverbundhalbzeug herangeführt wird.

Bei mittels Vakuumpassage(n) realisierten Verformungsmitteln empfiehlt es sich, die Unterdruckbeaufschlagung der Vakuumpassage(n) vor Aufsetzen des Stempels am Faserverbundhalbzeug vorzunehmen und während des Aufdrücken des Stempels aufrechtzuerhalten. Damit wird vermieden, dass die sich während der Unterdruckbeaufschlagung ergebende Streckung der Folie bedingt durch elastische (reversible) Streckungsanteile wieder reduziert wird, bevor die Folie am Faserverbundhalbzeug aufgesetzt ist. Vor diesem Hintergrund können z.B. ein oder mehrere an einer Vakuumpumpe angeschlossene flexible Vakuumschläuche mit der bzw. den Vakuumpassagen des Stempels verbunden sein, um den Stempel mitsamt der durch Unterdruckbeaufschlagung im verformten Zustand gehaltenen Folie unter Aufrechterhaltung der Unterdruckbeaufschlagung an das Faserverbundhalbzeug des Vakuumaufbaus heranzuführen. Dies kann wie bereits erwähnt manuell oder zumindest teilweise automatisiert, z. B. mittels eines Roboters oder dergleichen erfolgen.

In einer Weiterbildung dieser Idee der Heranführung des unterdruckbeaufschlagten Stempels an das Faserverbundhalbzeug ist vorgesehen, dass die Anordnung der Vakuumpassage(n) des Stempels mit einem abschließbaren Ventil versehen ist, welches ein Abschließen der zuvor unter Vakuum gesetzten Vakuumpassage(n) ermöglicht, so dass nach Schließen des Ventils der betreffende Vakuumschlauch vom Stempel abgekoppelt werden kann. In diesem Fall kann nach Aufsetzen des Stempels auf das am Werkzeug positionierte Faserverbundhalbzeug dieses Ventil wieder geöffnet werden, um somit die Vakuumpassage(n) zu belüften. Dies bevorzugt jedoch erst dann, nachdem die Unterdruckbeaufschlagung des Vakuumaufbaus aktiviert wurde (welche die Folie an das Faserverbundhalbzeug zieht).

Es können im Falle der korrugierten, d.h. lokale Vertiefungen bzw. Erhabenheiten aufweisenden Stempelfläche insbesondere an den Böden der Vertiefungen bzw. von den Erhabenheiten beabstandet Mündungen der Vakuumpassagenanordnung vorgesehen sein, um die Folie vor allem in die vertieften Bereiche der Stempelfläche hineinzuziehen. Die Anordnung der Vakuumpassagen kann z.B. durch das Innere des Stempels zu seitlichen oder hinteren (der Stempelfläche abgewandten) Stellen des Stempels verlaufen, an denen der oder die erwähnten Vakuumschläuche angeschlossen werden können.

Gemäß eines weiteren Aspekts der Erfindung ist der Stempel zur Durchführung eines Verfahrens der vorstehend erläuterten Art geeignet ausgebildet. Ein solcher Stempel ist aus einem flexiblen Material gebildet und kann insbesondere eine nicht-ebene, zum Halten der Folie vorgesehene Stempelfläche sowie Mittel zum Verformen der daran gehaltenen Folie in Anpassung an die nicht-ebene Stempelfläche aufweisen. Wie bereits erläutert, umfassen die Verformungsmittel eine Anordnung einer oder mehrerer Vakuumpassagen, die einerseits an einer oder mehreren Stellen der Stempelfläche münden und andererseits am seitlichen Rand und/oder auf der Rückseite des Stempels an eine oder mehrere Vakuumleitungen (z. B. flexible luftdichte Schläuche) anschließbar sind.

Ein derartiger Stempel kann z. B. dadurch hergestellt werden, dass eine von einer Schlauchanordnung gebildete Vakuumpassagenanordnung in ein Formwerkzeug eingelegt und mit Kunststoffmaterial (z. B. Schaumkunststoff) umspritzt bzw. umschäumt wird.

Mit einem solchen Stempel ist eine vorteilhafte Vorrichtung zur Übergabe der luftdichten Folie an den Vakuumaufbau bzw. z. B. eine Aushärtevorrichtung geschaffen. Das Heranfahren und Zurückfahren dieser Vorrichtung nach Übergabe der Folie kann besonders vorteilhaft unter Nutzung der elastischen Biegeeigenschaften der Vorrichtung erfolgen. Die Vorrichtung ist bei Fertigung aus Kunststoff leicht und somit gut handhabbar. Trotz des einfachen Aufbaus ergibt sich eine hohe Effizienz.

Das vorliegend offenbarte Verfahren zur Erstellung eines Vakuumaufbaus bzw. der erfindungsgemäß vorgesehene Stempel können vorteilhaft zur Herstellung von Faserverbundbauteilen aller Art verwendet werden.

Eine bevorzugte Verwendung ist die Herstellung von durch Verstärkungsprofile verstärkten Rumpfschalen für Fahrzeuge, insbesondere Luftfahrzeuge. In einer spezielleren Ausführungsform handelt es sich hierbei um im Wesentlichen einachsig gekrümmte und mit einer Vielzahl von längsverlaufenden Verstärkungsprofilen ("Stringern") versehene Rumpfschalen für Flugzeuge.

Insbesondere bei derartigen verstärkten Rumpfschalen können die Verstärkungsprofile auf der Innenseite der Rumpfschale verlaufend vorgesehen sein. In einer speziellen Ausführungsform sind die zur Bildung dieser Verstärkungsprofile vorgesehenen Komponenten des Faserverbundhalbzeuges bereits vollständig ausgehärtet, bevor diese bei der Erstellung des Vakuumaufbaus eingesetzt werden, wohingegen ein nicht-ausgehärtetes Prepreg zur Bildung der Rumpfschale eingesetzt wird. In diesem speziellen Fall wird bei der nachfolgenden Aushärtung lediglich noch die Rumpfschale ausgehärtet, wobei gleichzeitig eine innige Anbindung der Verstärkungsprofile an die Rumpfschale erfolgt (so genanntes "Co-Bonding").

Ganz allgemein ist anzumerken, dass die konkrete Verwendung des Vakuumaufbaus je nach Anwendungsfall variiert. So ist es z.B. abweichend vom vorstehend erläuterten speziellen Beispiel auch denkbar, dass der Vakuumaufbau lediglich im Rahmen eines Infiltrationsprozesses, oder lediglich im Rahmen eines Kompaktierungsprozesses, oder lediglich im Rahmen eines Aushärtungsprozesses verwendet wird. Die vorliegende Erfindung betrifft vor allem die Art und Weise der Erstellung eines für all diese Anwendungsfälle geeigneten Vakuumaufbaus.

Besonders nutzbringend sind die mit der Erfindung erzielbaren Vorteile bei der Herstellung eines relativ großflächigen Faserverbundbauteils, z. B. mit einer maximalen Erstreckung von mehr als 5 m, insbesondere mehr als 10 m und/oder einer Fläche (bei einem flächigen Bauteil wie z. B. einer Rumpfschale auf einer Flachseite) von mehr als 10 m², insbesondere mehr als 20 m², und/oder für die Herstellung eines Faserverbundbauteils, bei welchem die nicht-ebene Oberfläche des eingesetzten Faserverbundhalbzeuges bzw. die entsprechende Oberfläche des fertigen Faserverbundbauteils insgesamt "stark gekrümmt" ist bzw. eine deutlich ausgeprägt konkave oder konvexe Form besitzt. Letzteres soll bedeuten, dass abweichend von einer ebenen Form, bei welcher es eine einzige Normalenrichtung der Oberfläche gibt, die (lokalen) Normalenrichtungen der nicht-ebenen Oberfläche über einen größeren Winkelbereich (z.B. über wenigstens 30°, insbesondere wenigstens 60°) verteilt sind. Hierzu zwei Beispiele: Bei einer einachsig gleichmäßig gekrümmten halbzylindrischen Rumpfschale beträgt dieser Winkelbereich 180°. Bei einer Rumpfschale, die lediglich ein Viertel des Umfanges eines damit auszubildenden im Wesentlichen zylindrischen Rumpfes bereitstellt, beträgt dieser Winkelbereich 90°.

Insbesondere bei derart großen Winkelbereichen der Normalenverteilung können aufgrund der Flexibilität des Stempelmaterials Probleme im Zusammenhang mit dem Aufbringen (und dementsprechend Zurückziehen) der Stempelfläche an dem Faserverbundhalbzeug vermieden werden.

Die Erfindung wird nachfolgend anhand eines Ausführungsbeispiels mit Bezug auf die beigefügten Zeichnungen weiter beschrieben. Es stellen jeweils in einer schematischen Querschnittansicht dar:
- **Fig. 1**: ein Heranführen eines mit einer verformten Folie versehenen Stempels an die Oberfläche eines an einem Werkzeug positionierten Faserverbundhalbzeuges, in einem ersten Stadium, in welchem lediglich ein mittlerer Stempelbereich bereits am Faserverbundhalbzeug anliegt,
- **Fig. 2**: eine der Fig. 1 entsprechende Darstellung in einem nachfolgenden Stadium, in welchem der Stempel vollflächig am Faserverbundhalbzeug anliegt und die Folie auf die Oberfläche des Faserverbundhalbzeuges transferiert wird,
- **Fig. 3**: eine entsprechende Darstellung in einem nachfolgenden Stadium, in welchem lediglich bereits seitliche Stempelbereiche wieder von dem Faserverbundhalbzeug entfernt wurden, und
- **Fig. 4**: eine entsprechende Darstellung nach vollständiger Entfernung des Stempels vom Faserverbundhalbzeug,
- **Fig. 5**: die den Verfahrensschritten gemäß der Fig. 1 bis 4 vorausgegangene Aufbringung der (noch unverformten) Folie auf die Stempelfläche des Stempels, und
- **Fig. 6**: die nach der Aufbringung der Folie auf die Stempelfläche gemäß Fig. 5 erfolgende Verformung der Folie in Anpassung an die Stempelfläche.

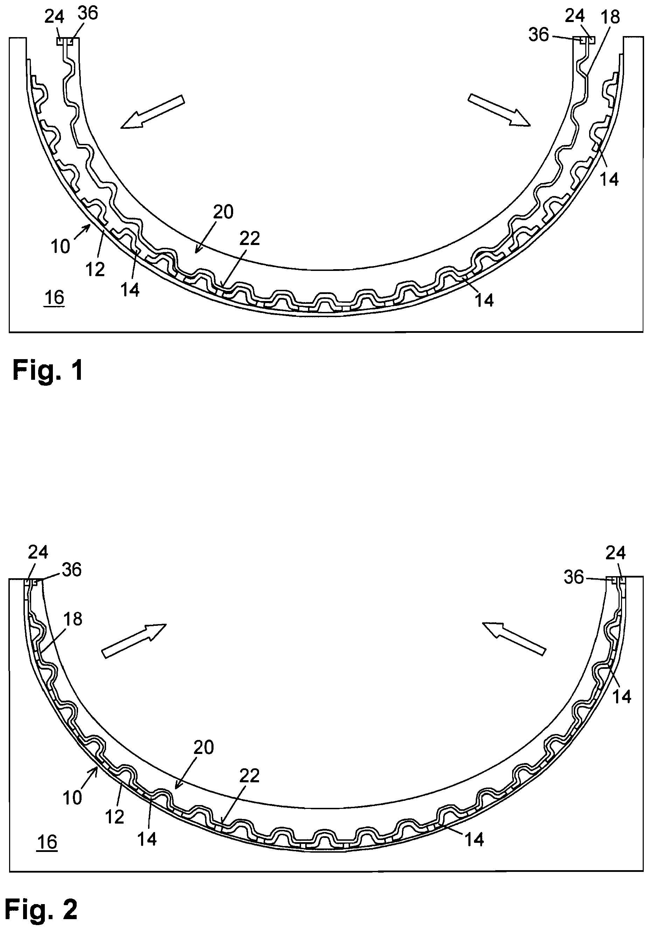

Die Fig. 1 bis 4 veranschaulichen ein Verfahren zur Erstellung eines Vakuumaufbaus zur Verarbeitung eines Faserverbundhalbzeuges 10 zu einem ausgehärteten Faserverbundbauteil.

Im dargestellten Ausführungsbeispiel ist das Faserverbundhalbzeug 10 mehrteilig, nämlich aus einer beispielsweise einachsig gekrümmten, schalenförmigen Komponente 12 und einer Vielzahl von längsverlaufenden Verstärkungsprofilkomponenten 14 zusammengesetzt.

Hierfür wurde zunächst die schalenförmige Komponente 12, welche eine etwa halbzylindrische Form besitzt, an einer Formfläche eines Werkzeuges 16 aufgelegt und sodann mit den Verstärkungsprofilkomponenten 14 vervollständigt.

Im dargestellten Ausführungsbeispiel ist die schalenförmige Komponente 12 als ein so genanntes Prepreg, also ein mit Matrixmaterial vorimprägniertes Fasermaterial vorgesehen, wohingegen die Verstärkungsprofilkomponenten 14 bei der Erstellung des Vakuumaufbaus als "trockene" Fasermaterialien eingesetzt werden. Zur Verbesserung der Haftung der Komponenten 14 an der Innenseite der Komponente 12 und/oder zur Verbesserung der Qualität der späteren Verbindung dieser Komponenten 12, 14 kann z. B. eine so genannte Binderlage oder eine Matrixmaterialschicht, gewissermaßen als "Klebstoff" zwischen jeweils eine Komponente 14 und die Komponente 12 eingebracht werden (nicht dargestellt).

Die Fasermaterialien zur Bildung der Komponenten 12, 14 können z. B. als ein- oder mehrlagige Gelege oder Gewebe aus Fasern oder Faserbündeln ("Roving") ausgebildet sein.

Nachdem in einem ersten Verfahrensschritt das Faserverbundhalbzeug 10 an der Formfläche des Werkzeuges 16 positioniert wurde, ergibt sich im dargestellten Ausführungsbeispiel eine der Formfläche abgewandte, nicht-ebene Oberfläche des Faserverbundhalbzeuges 10. Dies zum einen deshalb, weil bereits die schalenförmige Komponente 12 nicht eben ist, und zum anderen auch deshalb, weil die ansonsten glatte Innenseite der schalenförmigen Komponente 12 durch die Anordnung der Vielzahl von Verstärkungsprofilkomponenten 14 korrugiert wird. Die in den Figuren obere Seite des Faserverbundhalbzeuges 10 stellt eine Oberfläche mit zahlreichen lokalen Vertiefungen und Erhabenheiten dar.

Der nächste Verfahrensschritt zur Erstellung des Vakuumaufbaus besteht darin, dass diese nicht-ebene Oberfläche des Faserverbundhalbzeuges 10 durch Aufbringen einer luftdichten Folie 18 überdeckt wird.

Speziell dieser zweite Verfahrensschritt ist in den Fig. 1 bis 4 dargestellt, wobei diese Figuren jeweils verschiedene Stadien dieser Folienaufbringung zeigen.

Die Folie 18 wird mittels eines aus einem flexiblen Material (hier: PU-Schaumkunststoff) gebildeten Stempels 20 aufgebracht, der eine Stempelfläche 22 besitzt, an welcher zuvor die Folie 18 angebracht wurde. Die Folie 18 kann z. B. durch eine umlaufende Befestigung, ausgeführt als lösbare Verklebung, an der Stempelfläche 22 gehalten sein. Auf eine im dargestellten Ausführungsbeispiel vorgesehene spezielle Art und Weise, wie die Folie 18 am Stempel 20 gehalten wird, wird weiter unten noch eingegangen.

Fig. 1 zeigt ein erstes Stadium, in welchem die mit der Folie 18 versehene Stempelfläche 22 des Stempels 20 in einem mittleren Bereich bereits am Faserverbundhalbzeug 10 zur Anlage gebracht wurde, wohingegen die beiden seitlich äußeren Stempelflächenbereiche sukzessive noch zur Anlage gebracht werden (vgl. Pfeile in Fig. 1). Mit anderen Worten sind seitliche Stempelbereiche zu Beginn noch etwas "eingeklappt" bzw. "eingerollt", was aufgrund der Flexibilität des Stempelmaterials problemlos möglich ist.

Fig. 2 zeigt ein zweites Stadium, in welchem nach einem "Ausrollen" der beiden seitlich äußeren Stempelbereiche auch diese zur Anlage am Faserverbundhalbzeug 10 gekommen sind. Im dargestellten Beispiel entspricht die in Fig. 2 gezeigte Konfiguration des flexiblen Stempels 20 seinem Ursprungszustand (wohingegen der in Fig. 1 dargestellte Zustand einer elastischen Deformation des Stempels 20 entspricht).

Die Folie 18 liegt gemäß Fig. 2 nun flächig an der Oberfläche des Faserverbundhalbzeuges 10 an und bildet zusammen mit einer umlaufenden Dichtung 24, dem Faserverbundhalbzeug 10 und dem Werkzeug 16 den an sich bereits fertiggestellten Vakuumaufbau.

Mittels einer (in den Figuren nicht dargestellten) Unterdruckbeaufschlagung des von der Folie 18 und der Formfläche des Werkzeuges 16 umschlossenen Raumes kann das darin eingeschlossene Faserverbundhalbzeug 10 bei seiner späteren Verarbeitung kompaktiert und können die einzelnen Komponenten 12, 14 innig aneinander gedrückt werden. Die Unterdruckbeaufschlagung kann z. B. über einen Vakuumschlauch bewerkstelligt werden, der durch eine gegenüber dem Schlauch abgedichtete Öffnung der Folie 18 in den davon umschlossenen Raum führt. Alternativ oder zusätzlich könnten entsprechende Vakuumpassagen durch das Werkzeug 16 hindurch verlaufen und in diesen umschlossenen Raum münden.

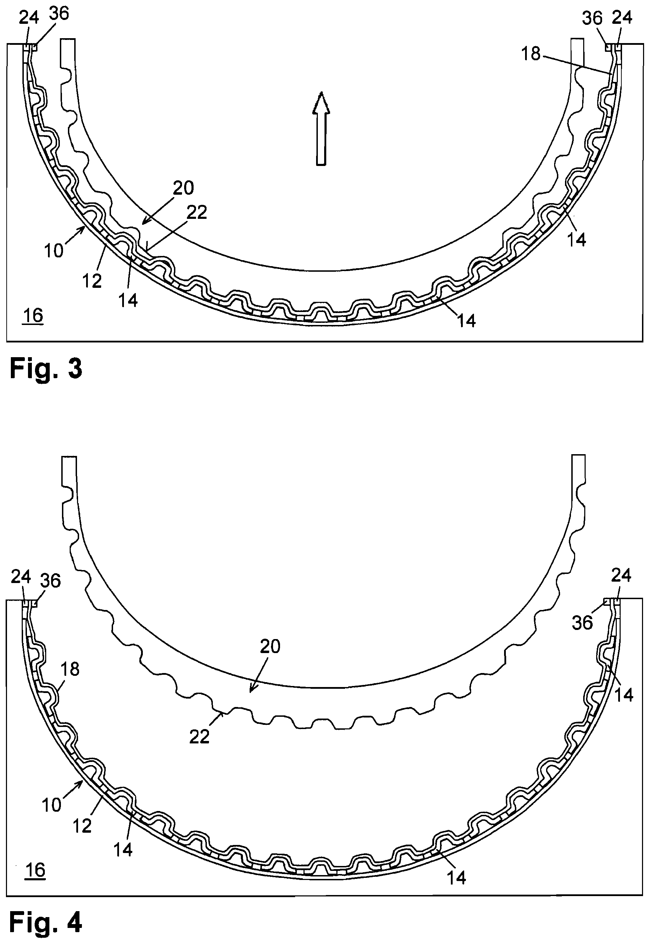

Zuvor wird jedoch noch der Stempel 20 in nachfolgend mit Bezug auf die Fig. 3 und 4 beschriebener Weise zurückgezogen. Der Verbleib der Folie 18 am Vakuumaufbau bzw. Faserverbundhalbzeug 10 (und nicht am Stempel 20) lässt sich in einfacher Weise dadurch sicherstellen, dass bereits in der Situation gemäß Fig. 2 die Unterdruckbeaufschlagung des Vakuumaufbaus aktiviert wird, so dass die Folie 18 durch den Unterdruck am Faserverbundhalbzeug gehalten bzw. durch den auf der Außenseite der Folie 18 herrschenden größeren Atmosphärendruck angedrückt wird.

Fig. 3 zeigt ein drittes Stadium, in welchem die beiden seitlich äußeren Bereiche des Stempels 20 durch eine entsprechende "Einrollverlagerung" (vgl. Pfeile in Fig. 2) von dem am Werkzeug 16 erstellten Vakuumaufbau entfernt wurden, und sodann eine vertikale Verlagerung des Stempels 20 nach oben (vgl. Pfeil in Fig. 3) beginnt, um auch den mittleren Stempelbereich wieder vom Vakuumaufbau abzuheben.

Fig. 4 zeigt schließlich ein viertes Stadium, in welchem der Stempel 20 vollständig vom Werkzeug 16 mit dem daran erstellten Vakuumaufbau entfernt ist.

Sämtliche mit Bezug auf die Fig. 1 bis 4 beschriebenen Verlagerungen des Stempels 20 bzw. Krümmungsbewegungen einzelner Stempelbereiche können entweder manuell oder zumindest teilweise automatisiert durchgeführt werden. Für eine automatisierte Aufbringung der Folie 18 mittels des Stempels 20 kann der Stempel 20 z. B. mit seiner Rückseite (in den Fig. 1 bis 4) mit geeigneten Handhabungsorganen eines Roboters verbunden sein.

Die Verwendung des Stempels 20 in der beschriebenen Weise ermöglicht vorteilhaft eine praktisch faltenfreie Aufbringung der Folie 18 und ein hohes Maß an Reproduzierbarkeit im Falle einer Serienproduktion von Faserverbundbauteilen.

Ein weiterer Vorteil der Erfindung bzw. des Stempels 20 besteht darin, dass die flexible Ausbildung des Stempels in der Regel auch ein relativ niedriges Gewicht für den Stempel bedeutet (z. B. bei einem Stempel, der wenigstens teilweise aus Schaumkunststoff hergestellt ist). In einer bevorzugten Ausführungsform besitzt der Stempel z. B. ein Flächengewicht von weniger als 100 kg/m², insbesondere weniger als 60 kg/m².

Im dargestellten Ausführungsbeispiel erfolgt die Abdichtung der Folie 18 gegenüber der Formfläche des Werkzeuges 16 durch die zuvor an der Folie 18 angebrachte Dichtung 24 (z. B. Gummiprofil oder doppelseitiges Klebeband). Genau so gut könnte eine derartige Dichtung stattdessen bereits zu Beginn des mit den Fig. 1 bis 4 veranschaulichten Folientransfers an der Formfläche des Werkzeuges 16 angeordnet sein. Unter Umständen kann auf eine derartige Dichtung jedoch auch verzichtet werden, falls z. B. der umlaufende Rand der Folie 18 durch die Unterdruckbeaufschlagung bereits eine ausreichende Dichtwirkung bereitstellt.

Nach Erstellung des Vakuumaufbaus und Entfernung bzw. "Entformung" des Stempels 20 (Fig. 4) folgt bei dem beschriebenen Ausführungsbeispiel eine thermische Aushärtung des Faserverbundhalbzeuges 10, sei es mit in der Umgebungsatmosphäre befindlichen Vakuumaufbau oder nach Verbringen des Vakuumaufbaus in einen Autoklaven. Im dargestellten Beispiel härtet hierbei das schalenförmige Prepreg 12 aus und geht eine innige Verbindung mit den (bereits ausgehärteten) Verstärkungsprofilkomponenten 14 ein. Die satte Anlage der Folie 18 am Faserverbundhalbzeug 10 bewirkt eine sehr gleichmäßige und reproduzierbare Druckbeaufschlagung, was wiederum zu einer gleichbleibend hohen Qualität des damit gebildeten Faserverbundbauteils führt.

Die Verarbeitung führt im dargestellten Beispiel zur Schaffung eines Flugzeug-Rumpfbauteils mit integrierten Stringern.

Es versteht sich, dass der konkrete Aufbau des eingesetzten Faserverbundhalbzeuges im Rahmen der Erfindung eine untergeordnete Rolle spielt. Die mit der Erfindung erzielten Vorteile ergeben sich auch für anders aufgebaute bzw. zusammengesetzte Faserverbundhalbzeuge.

Nachfolgend sollen noch einige vorteilhafte Besonderheiten erläutert werden, die bei dem beschriebenen Ausführungsbeispiel vorgesehen sind.

Eine Besonderheit besteht z. B. darin, dass die Stempelfläche 22 in Anpassung an die nicht-ebene Oberfläche des Faserverbundhalbzeuges 10 formgestaltet ist. Damit wird beim Aufdrücken des Stempels 20 die Folie 18 besonders gleichmäßig an die Oberfläche des Faserverbundhalbzeuges angedrückt.

Eine weitere Besonderheit besteht darin, dass die an der Stempelfläche 22 gehaltene Folie 18 bereits in Anpassung an die Formgestaltung der Stempelfläche 22 (und dementsprechend in Anpassung an die Form der nicht-ebenen Oberfläche des Faserverbundhalbzeuges 10) verformt ist, noch bevor der Stempel 20 an der Oberfläche des Faserverbundhalbzeuges 10 zur Anlage kommt. Im dargestellten Ausführungsbeispiel wurde diese Verformung der Folie 18 durch eine das Folienmaterial plastisch verformende Streckung bewerkstelligt, bei welcher eine in irreversible Streckung der Folie in den vertieften Bereichen der Stempelfläche 22 etwa 100 % beträgt.

Abweichend davon könnte die Streckung der Folie jedoch auch lediglich bis zu einer elastischen Dehngrenze erfolgen, bei welcher noch keine oder allenfalls eine geringfügige irreversible Streckung im Folienmaterial verbleibt.

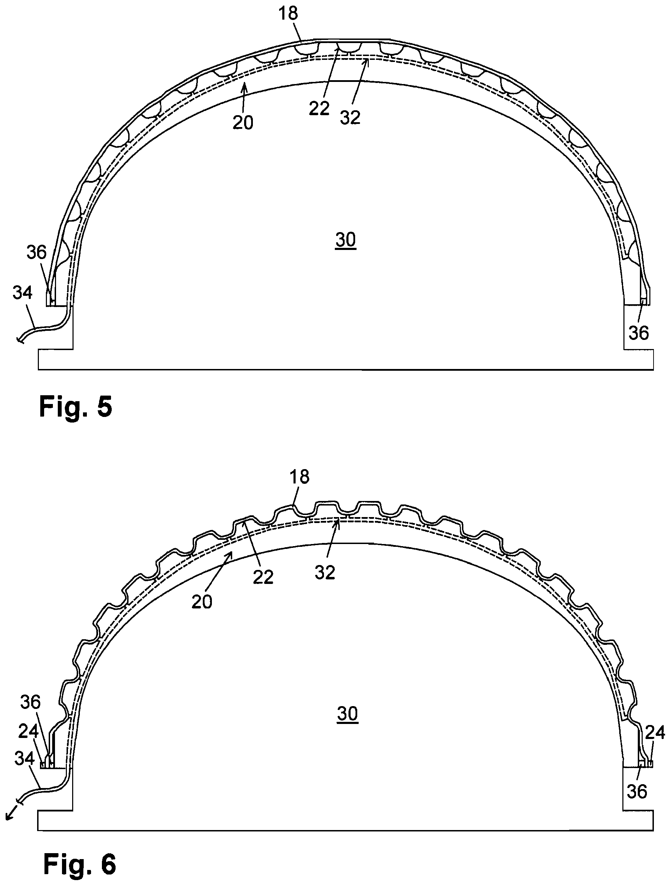

Wenngleich gemäß einem weiteren Aspekt die Verformung der Folie 18 noch vor deren Aufbringung am Faserverbundhalbzeug 10 in unterschiedlicher Weise durchgeführt werden kann, so besteht eine weitere Besonderheit des dargestellten Ausführungsbeispiels darin, dass die Verformung der Folie unter Zuhilfenahme des Stempels 20 durchgeführt wird, was nachfolgend anhand der Fig. 5 und 6 näher erläutert werden soll.

Fig. 5 zeigt eine Auflage 30, auf welcher nacheinander der Stempel 20 und die Folie 18 wie dargestellt aufgelegt werden. Die Auflagefläche der Auflage 30 besitzt hierbei eine konvexe Form derart, dass der mit seiner Rückseite darauf abgelegte Stempel 20 etwa diejenige (unverformte) Gestalt annimmt, in welcher der Stempel 20 später am Faserverbundhalbzeug 10 zur Anlage kommt (vgl. Fig. 4).

Im Inneren des Stempels 20 befindet sich eine Anordnung 32 von unterdruckbeaufschlagbaren Vakuumpassagen. Wie dargestellt besitzt diese Kanalanordnung 32 in den Bereichen der Vertiefungen der Stempelfläche 22 Mündungen. Um die an der Stempelfläche 22 aufgelegte Folie 18 zur Stempelfläche 22 hin zu belasten und somit in Anpassung an diese Stempelfläche 22 plastisch zu verformen, werden die Vakuumpassagen über einen flexiblen Vakuumschlauch 34 an eine Vakuumpumpe angeschlossen und somit evakuiert.

Die Unterdruckbeaufschlagung über den Vakuumschlauch 34 bewirkt die erwähnte Verformung der Folie 18. Dieser Zustand, bei welchem die Folie 18 sich eng an die Stempelfläche 22 anschmiegt, ist in Fig. 6 dargestellt. Um ein Verrutschen der Folie 18 bzw. insbesondere derer Randbereiche zuverlässig zu vermeiden, empfiehlt sich eine Fixierung der Folie 18 zumindest an deren Rand. Im dargestellten Beispiel ist dies durch eine lösbare Verklebung 36 realisiert. In Fig. 6 ferner ersichtlich ist die Anbringung der Dichtung 24.

Ausgehend von dem Zustand gemäß Fig. 6 wird der Stempel 20 samt daran gehaltener und (irreversibel oder reversibel) verformter Folie 18 für die oben bereits erläuterten Verfahrensschritte gemäß der Fig. 1 bis 4 eingesetzt. Zweckmäßigerweise wird die Unterdruckbeaufschlagung des Stempels 20 hierbei solange aufrechterhalten bis der Stempel 20 vollflächig am Faserverbundhalbzeug 10 angelegt ist und die Unterdruckbeaufschlagung des Vakuumaufbaus aktiviert ist, um die Folie am Faserverbundhalbzeug 10 zu halten.

## Patentansprüche

1. Anordnung, mit:
einem Stempel (20) aus Schaumkunststoff, mit einer mit lokalen Vertiefungen und Erhabenheiten ausgebildeten Stempelfläche (22), und mit einer Kanalanordnung (32) von unterdruckbeaufschlagbaren Vakuumpassagen im Inneren des Stempels (20), welche in den Bereichen der lokalen Vertiefungen der Stempelfläche (22) Mündungen aufweisen; und
einer auf der Stempelfläche (22) des Stempels (20) aufgelegten luftdichten Folie (18), welche durch eine lösbare Verklebung (36) am Rand der Stempelfläche (22) an der Stempelfläche (22) gehalten wird;
wobei die an der Stempelfläche (22) gehaltene Folie (18) in Anpassung an die Formgestaltung der Stempelfläche (22) durch Unterdruckbeaufschlagung der Vakuumpassagen verformbar ist.

2. Anordnung gemäß Anspruch 1, ferner aufweisend:
einen Vakuumschlauch (34), welcher an die unterdruckbeaufschlagbaren Vakuumpassagen der Kanalanordnung (32) angeschlossen ist; und
eine Vakuumpumpe, welche an den Vakuumschlauch (34) angeschlossen ist, und welche dazu ausgelegt ist, die an der Stempelfläche (22) gehaltene Folie (18) in Anpassung an die lokalen Vertiefungen und Erhabenheiten der Stempelfläche (22) durch die Unterdruckbeaufschlagung der Vakuumpassagen zu verformen.

3. Anordnung gemäß Anspruch 1 oder 2, wobei die Stempelfläche (22) in einem Ursprungszustand des Stempels (20) einen ersten Krümmungsradius und in einem durch elastische Deformation des Stempels (20) erreichbaren Verformungszustand einen zweiten Krümmungsradius aufweist, der kleiner als der erste Krümmungsradius ist.

## Claims

1. Arrangement, with:
a stamp (20) of foamed plastic, having a stamp surface (22) formed with local depressions and elevations, and having a channel arrangement (32) of vacuum passages in the interior of the stamp (20), wherein the vacuum passages can be applied with a vacuum, and which have openings in the regions of the local depressions of the stamp surface (22); and
an airtight foil (18) placed on the stamp surface (22) of the stamp (20), which foil is held to the stamp surface (22) by a detachable adhesive (36) at the edge of the stamp surface (22);
wherein the foil (18) held on the stamp surface (22) is deformable in adaptation to the shape of the stamp surface (22) by applying vacuum to the vacuum passages.

2. Arrangement according to claim 1, further comprising:
a vacuum hose (34) connected to the vacuum applicable vacuum passages of the channel assembly (32); and
a vacuum pump which is connected to the vacuum hose (34) and which is designed to deform the foil (18) that is held on the stamp surface (22) in adaptation to the local depressions and elevations of the stamp surface (22) by applying vacuum to the vacuum passages.

3. Arrangement according to claim 1 or 2, wherein the stamp surface (22) has a first radius of curvature in an original state of the stamp (20) and a second radius of curvature smaller than the first radius of curvature in a deformation state achievable by elastic deformation of the stamp (20).

## Revendications

1. Dispositif, avec:
un poinçon (20) en matière plastique alvéolaire, avec une surface de poinçon (22) réalisée avec des creux et des reliefs locaux, et avec un agencement de canaux (32) de passages à vide pouvant être soumis à une dépression à l'intérieur du poinçon (20), qui présentent des embouchures dans les zones des creux locaux de la surface de poinçon (22) ; et
une feuille étanche à l'air (18) posée sur la surface de poinçon (22) du poinçon (20), qui est maintenue sur la surface de poinçon (22) par un collage amovible (36) sur le bord de la surface de poinçon (22) ;
la feuille (18) maintenue sur la surface de poinçon (22) pouvant être déformée en s'adaptant à la configuration de forme de la surface de poinçon (22) par l'application d'une dépression aux passages à vide.

2. Dispositif selon la revendication 1, comprenant en outre :
un tuyau à vide (34) qui est raccordé aux passages à vide pouvant être mis en dépression de l'agencement de canaux (32) ; et
une pompe à vide qui est raccordée au tuyau à vide (34) et qui est conçue pour déformer la feuille (18) maintenue sur la surface de poinçon (22) en l'adaptant aux creux et aux bosses locaux de la surface de poinçon (22) par la mise en dépression des passages à vide.

3. Dispositif selon la revendication 1 ou 2, dans lequel la surface de poinçon (22) présente un premier rayon de courbure dans un état initial du poinçon (20) et un deuxième rayon de courbure inférieur au premier rayon de courbure dans un état de déformation pouvant être obtenu par déformation élastique du poinçon (20).
